(19) Europäisches Patentamt
European Patent Office
Office européen des brevets

(11) EP 3 102 328 B1

(12) **EUROPÄISCHE PATENTSCHRIFT**

(45) Veröffentlichungstag und Bekanntmachung des Hinweises auf die Patenterteilung:
**17.06.2020 Patentblatt 2020/25**

(21) Anmeldenummer: **15702490.2**

(22) Anmeldetag: **04.02.2015**

(51) Int Cl.:
***B01J 45/00*** *(2006.01)* ***B01J 39/18*** *(2017.01)*
***C02F 1/42*** *(2006.01)* ***C02F 1/68*** *(2006.01)*

(86) Internationale Anmeldenummer:
**PCT/EP2015/052284**

(87) Internationale Veröffentlichungsnummer:
**WO 2015/118002 (13.08.2015 Gazette 2015/32)**

(54) **NEUE ALUMINIUMDOTIERTE, IMINODIESSIGSÄUREGRUPPEN ENTHALTENDE CHELATHARZE**

NOVEL ALUMINIUM DOPED CHELATE RESINS CONTAINING IMINODIACETIC ACID GROUPS

NOUVEAUX GROUPES D'ACIDES IMINODIACÉTIQUES DOPÉS À L'ALUMINIUM CONTENANT DES RÉSINES DE CHÉLATE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.02.2014 EP 14154325**

(43) Veröffentlichungstag der Anmeldung:
**14.12.2016 Patentblatt 2016/50**

(73) Patentinhaber: **Lanxess Deutschland GmbH**
**50569 Köln (DE)**

(72) Erfinder:
- **NEUMANN, Stefan**
  **51375 Leverkusen (DE)**
- **KLIPPER, Reinhold**
  **50933 Köln (DE)**
- **MAKROPOULOS, Pavlos**
  **51377 Leverkusen (DE)**
- **BARBIER, Jenny**
  **50679 Köln (DE)**
- **SCHRÖDER, Maresa**
  **51375 Leverkusen (DE)**

(56) Entgegenhaltungen:
**EP-A1- 2 305 382**

- **SUBBAIAH MUTHU PRABHUA & S MEENAKSHIA: "Effect of metal ions loaded onto iminodiacetic acid functionalized cation exchange resin for selective fluoride removal", DESALINATION AND WATER TREATMENT : SCIENCE AND ENGINEERING ; DWT, TAYLOR & FRANCIS, UK, Bd. 52, Nr. 13-15, 20. Mai 2013 (2013-05-20), Seiten 2527-2536, XP008169289, ISSN: 1944-3994, DOI: 10.1080/19443994.2013.792747 [gefunden am 2014-05-20]**
- **YOUNG KU ET AL: "The removal of fluoride ion from aqueous solution by a cation synthetic resin", SEPARATION SCIENCE AND TECHNOLOGY, DEKKER, NEW YORK, NY, US, Bd. 37, Nr. 1, 15. Februar 2007 (2007-02-15), Seiten 89-103, XP008169276, ISSN: 0149-6395, DOI: 10.1081/SS-120000323 [gefunden am 2007-02-15]**
- **PARIPURNANDA LOGANATHAN ET AL: "Defluoridation of drinking water using adsorption processes", JOURNAL OF HAZARDOUS MATERIALS, Bd. 248-249, 4. Januar 2013 (2013-01-04), Seiten 1-19, XP055118765, ISSN: 0304-3894, DOI: 10.1016/j.jhazmat.2012.12.043**

EP 3 102 328 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft aluminiumdotierte, Iminodiessigsäuregruppen enthaltende Chelatharze, ein Herstellungsverfahren für alumuminiumdotierte Iminodiessigsäuregruppen enthaltende Chelatharze, eine Vorrichtung enthaltend mindestens eine Schicht, mindestens eines aluminiumdotierten, Iminodiessigsäuregruppen enthaltenden Chelatharzes, sowie die Verwendungen dieser Vorrichtung und der Chelatharze zur Entfernung von Fluorid aus Wasser.

Fluorid ist ein Spurenelement, das überall in unserer Umwelt vorkommt. Zudem fällt es als Abfallprodukt bei der industriellen Produktion von Keramiken oder Porzellan oder in der Halbleiter- und Solarindustrie an. Aufgrund der bestehenden Produktionsprozesse wird es dabei häufig mit dem Abwasser entsorgt. Natürliche Vorkommen können ebenfalls zu Belastungen des Wassers durch Fluorid führen.

Die Entfernung von Fluorid aus Wasser wird dann erforderlich, wenn das Wasser zu hohe Fluoridkonzentration aufweist. Fluorid ist zwar für den Menschen ein wichtiges Spurenelement und dient zur Stärkung der Knochen und Zähne, hat jedoch bei erhöhter Aufnahme über einen längeren Zeitraum toxische Eigenschaften und kann zu Knochen- und Zahnkrankheiten, wie Osteosklerose oder Fluorose führen. Ebenso besteht der Verdacht auf Kanzerogenität. In Deutschland dürfen laut Trinkwasserverordnung Fluoridionen bis zu einer Konzentration von 1,5 ppm (mg/l) im Trinkwasser enthalten sein. Auch der Richtwert der Weltgesundheitsorganisation (WHO) für Fluorid im Trinkwasser liegt bei 1,5 ppm (mg/l).

Herkömmliche Verfahren zur Entfernung von Fluorid aus Abwasser, wie die aus der DE-A 2801724 bekannte Fällung durch Zugabe von Calciumchlorid oder die aus der DE-A 3004058 bekannte Adsorption von Fluorid an aktivierter Tonerde, eignen sich nicht oder nur bedingt zur Trinkwasseraufbereitung. Durch Fällung können aus eigenen Erfahrungen auch mit erheblichen Überschüssen an Fällmittel, nur Konzentrationen von 3 bis 10 ppm Fluorid erreicht werden, was noch immer deutlich oberhalb des geforderten Grenzwertes von 1,5 ppm liegt. Die Adsorption von Fluorid an aktivierter Tonerde ist ebenfalls zur Trinkwasseraufbereitung ungeeignet, da die Kapazitäten sehr sensibel von der Wasserzusammensetzung abhängen. Außerdem wird der pH-Wert des abgegebenen Wassers beeinflusst und die Aluminiumoxidkörner der aktivierten Tonerde geben Aluminium an das behandelte Wasser ab, womit der in der deutschen Trinkwasserverordnung geforderte Aluminiumgrenzwert von 0,2 ppm leicht überschritten werden kann.

Ein weiteres Verfahren zur Entfernung von Fluoriden aus Wasser, bei dem die Fluoride mit Hilfe von Natriumaluminat gefällt werden, ist aus der DE-A 3129473 bekannt. Nachteilig an diesem Verfahren ist ebenfalls, dass das Wasser weiterhin zu hohe Fluoridkonzentrationen enthält.

Zudem sind aus "Solvent Extraction and Ion Exchanger", Vol. 22, No. 2, pp. 305-322, 2004, aluminium-dotierte Amberliteharze bekannt, die zur Fluoridentfernung genutzt werden, aber den Nachteil haben, ebenfalls zu hohe Mengen an Aluminiumionen freizusetzen und die eine zu geringe Fluoridaufnahmekapazität aufweisen.

Die Veröffentlichung "Effect of metal ions loaded onto iminodiacetic acid functionalized cation exchange resin for selective fluoride removal", DESALINATION AND WATER TREATMENT : SCIENCE AND ENGINEERING ; DWT, TAYLOR & FRANCIS, Bd. 52, Nr. 13-15, 20. Mai 2013, Seiten 2527-2536, S. M. PRABHUA und S MEENAKSHIA beschreibt makroporöse, aluminiumdotierte Iminodiessigsäuregruppen enthaltende Polystyrolchelatharze.die Fluorid adsorbieren können.

Den bekannten Chelatharzen ist gemeinsam, dass sie zu geringe Fluoridkapazitäten aufweisen und daher nicht effizient eingesetzt werden können. Zudem können sie toxisch wirkende Substituenten enthalten.

Es bestand daher weiterhin ein Bedürfnis nach einem Chelatharz zur Fluoridentfernung, mit dem die Nachteile des Standes der Technik überwunden werden.

Überraschend wurde nun gefunden, dass ein aluminiumdotiertes, Iminodiessigsäuregruppen enthaltendes Chelatharz Fluorid effizient aus Wasser entfernt.

Gegenstand der Erfindung ist daher ein aluminiumdotiertes, Iminodiessigsäuregruppen enthaltendes Chelatharz enthaltend funktionelle Gruppen der Formel (I)

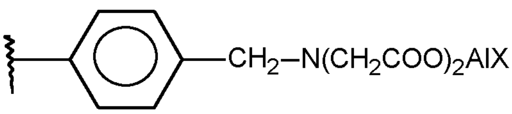 (I)

wobei für das Polymergerüst steht und X für ein beliebiges einwertiges Anion steht, mit einem Erstsubstitutionsgrad durch Phthalimidomethylgruppen von 0,6 bis 1,5 und einem Funktionalisierungsgrad der Aminogruppen durch Essigsäuregruppen von 1,4 bis 1,65.

X kann z.B. für Nitrat, Nitrit, Hydrogensulfat, Hydrogencarbonat oder ein Halogenid stehen. X steht bevorzugt für Chlorid.

Des Weiteren ist von der Erfindung ein Herstellungsverfahren der erfindungsgemäßen aluminiumdotierten,

Iminodiessigsäuregruppen enthaltenden Chelatharze enthaltend funktionelle Gruppen der Formel (I)

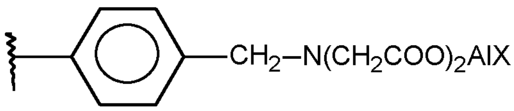 (I)

wobei ∿ für das Polymergerüst steht und X für ein beliebiges einwertiges Anion steht, mit einem Erstsubstitutionsgrad durch Phthalimidomethylgruppen von 0,6 bis 1,5 und einem Funktionalisierungsgrad der Aminogruppen durch Essigsäuregruppen von 1,4 bis 1,65 umfasst, bei dem,

a.) das Monomertröpfchen aus wenigstens einer monovinylaromatischen Verbindung und wenigstens einer polyvinylaromatischen Verbindung sowie wenigstens einem Porogen und wenigstens einem Initiator zu einem vernetzten Perlpolymerisat umsetzt werden,

b.) das vernetzte Perlpolymerisat aus Schritt a) mit Phthalimidderivaten phthalimidomethyliert wird und bei dieser Umsetzung das Phthalimidderivat in einem Verhältnis von 0,7 mol bis 1,7 mol pro Mol Perlpolymerisat eingesetzt wird,

c.) das phthalimidomethylierte Perlpolymerisat mit einem Erstsubstitutionsgrad durch Phtalimidomethylgruppen von 0,6 bis 1,5 aus Schritt b) zu aminomethyliertem Perlpolymerisat umsetzt und

d.) das aminomethylierte Perlpolymerisat aus Schritt c) mit Chloressigsäure oder deren Salze zu Chelatharzen mit Iminodiessigsäuregruppen mit einem Funktionalisierungsgrad der Aminogruppen durch Essigsäuregruppen von 1,4 bis 1,65 umgesetzt werden und das molare Verhältnis von Chloressigsäure oder deren Salze 1,8:1 bis 2,5:1 bezogen auf die Menge des eingesetzten aminomethylierten Perlpolymerisats beträgt und

e.) das Iminodiessigsäuregruppen enthaltende Chelatharz aus Schritt d) mit einer Aluminiumsalzlösung eines dreiwertigen Aluminiumions in Kontakt gebracht wird.

Als monovinylaromatische Verbindungen im Sinne der vorliegenden Erfindung werden in Verfahrensschritt a) bevorzugt monoethylenisch ungesättigte Verbindungen, besonders bevorzugt Styrol, Vinyltoluol, Ethylstyrol, α-Methylstyrol, Chlorstyrol, Chlormethylstyrol, Acrylsäure-alkylester oder Methacrylsäurealkylester, eingesetzt.

Insbesondere bevorzugt wird Styrol oder Mischungen aus Styrol mit den vorgenannten Monomeren eingesetzt.

Bevorzugte polyvinylaromatische Verbindungen im Sinne der vorliegenden Erfindung sind für Verfahrensschritt a) multifunktionelle ethylenisch ungesättigte Verbindungen, besonders bevorzugt Divinylbenzol, Divinyltoluol, Trivinylbenzol, Divinylnaphtalin, Trivinylnaphtalin, 1,7-Octadien, 1,5-Hexadien, Ethylenglycoldimethacrylat, Trimethylolpropantrimethacrylat oder Allylmethacrylat, insbesondere bevorzugt Divinylbenzol.

Die polyvinylaromatischen Verbindungen werden bevorzugt in Mengen von 1-20 Gew.-%, besonders bevorzugt 2-12 Gew.-%, insbesondere bevorzugt 4-10 Gew.-%, bezogen auf das Monomer oder dessen Mischung mit weiteren Monomeren eingesetzt. Die Art der polyvinylaromatischen Verbindungen (Vernetzer) wird im Hinblick auf die spätere Verwendung des kugelförmigen Polymerisats ausgewählt. Im Falle des Einsatzes von Divinylbenzol sind kommerzielle Divinylbenzolqualitäten, die neben den Isomeren des Divinylbenzols auch Ethylvinylbenzol enthalten, ausreichend. In einer bevorzugten Ausführungsform der vorliegenden Erfindung kommen in Verfahrensschritt a) mikroverkapselte Monomertröpfchen zum Einsatz.

Für die Mikroverkapselung der Monomertröpfchen kommen die für den Einsatz als Komplexkoazervate bekannten Materialien in Frage, insbesondere Polyester, natürliche und synthetische Polyamide, Polyurethane oder Polyharnstoffe.

Als natürliches Polyamid wird bevorzugt Gelatine eingesetzt. Diese kommt insbesondere als Koazervat und Komplexkoazervat zur Anwendung. Unter gelatinehaltigen Komplexkoazervaten im Sinne der Erfindung werden vor allem Kombinationen von Gelatine mit synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid und Methacrylamid. Besonders bevorzugt werden Acrylsäure und Acrylamid eingesetzt. Gelatinehaltige Kapseln können mit üblichen Härtungsmitteln wie beispielsweise Formaldehyd oder Glutardialdehyd gehärtet werden. Die Verkapselung von Monomertröpfchen mit Gelatine, gelatinehaltigen Koazervaten und gelatinehaltigen Komplexkoazervaten wird in der EP-A 0 046 535 eingehend beschrieben. Die Methoden der Verkapselung mit synthetischen Polymeren sind bekannt. Bevorzugt ist die Phasengrenzflächenkondensation, bei der eine im Monomertröpfchen gelöste Reaktivkomponente (insbesondere ein Isocyanat oder ein Säurechlorid) mit einer zweiten, in der wässrigen Phase gelösten Reaktivkomponente (insbesondere einem Amin), zur Reaktion gebracht wird.

Die gegebenenfalls mikroverkapselten Monomertröpfchen enthalten wenigstens einen Initiator oder Mischungen von Initiatoren zur Auslösung der Polymerisation. Für das erfindungsgemäße Verfahren bevorzugte Initiatoren sind Peroxyverbindungen, insbesondere bevorzugt Dibenzoylperoxid, Dilauroylperoxid, Bis (p-chlorbenzoyl)peroxid, Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan oder tert.-Amylperoxy-2-etylhexan, sowie Azoverbindungen wie 2,2'-Azobis(isobutyronitril) oder 2,2'-Azobis(2-methylisobutyronitril).

Die Initiatoren werden bevorzugt in Mengen von 0,05 bis 2,5 Gew.-%, besonders bevorzugt 0,1 bis 1,5 Gew.-%, bezogen auf die Monomeren-Mischung, angewendet.

Bevorzugt werden Porogene eingesetzt, um im kugelförmigen Polymerisat eine makroporöse Struktur zu erzeugen. Hierfür sind organische Lösungsmittel geeignet, die das entstandene Polymerisat schlecht lösen bzw. quellen. Beispielhaft seien hierfür Hexan, Octan, Isooctan, Isododecan oder Octanol und deren Isomere genannt.

Die Durchführung des Verfahrensschrittes a) ist dem Fachmann z.B. aus der EP-A 2305382 hinreichend bekannt.

Gemäß der vorliegenden Erfindung können die Chelatharze sowohl in heterodisperser Teilchengrößenverteilung als auch in monodisperser Teilchengrößenverteilung erhalten werden.

Ein monodisperses, vernetztes Perlpolymerisat wird in Verfahrensschritt a) erhalten, indem die Umsetzung des Verfahrensschrittes a) nach dem Jetting (Verdüsungsverfahren) oder nach dem seed / feed Verfahren (Saatzulauf-Verfahren) durchgeführt wird. Beide Verfahrensschritte sind aus dem Stand der Technik bekannt und z.B. in der EP-A 2259874 beschrieben. Die Offenbarung für diese beiden Schritte aus der EP-A2259874 wird durch den Bezug auf diese Anmeldung in die vorliegende Beschreibung aufgenommen.

Als monodispers werden in der vorliegenden Anmeldung solche Stoffe bezeichnet, bei dem mindestens 90 Volumen- oder Massen-% der Teilchen einen Durchmesser besitzen, der in dem Intervall mit der Breite von + 10% des häufigsten Durchmessers um den häufigsten Durchmesser herum liegt.

Zum Beispiel bei einem Stoff mit häufigstem Durchmesser von 0,5 mm liegen mindestens 90-Volumen- oder Massen-% in einem Größenintervall zwischen 0,45 mm und 0,55 mm, bei einem Stoff mit häufigstem Durchmesser von 0,7 mm liegen mindestens 90 Volumen- oder Massen-% in einem Größenintervall zwischen 0,77 mm und 0,63 mm.

Bevorzugt werden monodisperse, aluminiumdotierte, Iminodiessigsäuregruppen enthaltene Chelatharze hergestellt.

Der Verfahrensschritt b) kann z.B. so durchgeführt werden, dass zunächst das Amidomethylierungsreagens hergestellt wird und dieses dann zu dem Produkt aus Verfahrensschritt a) hinzugegeben wird. Verfahrensschritt b) kann aber ebenfalls in Form einer Eintopfreaktion durchgeführt werden, bei dem das Produkt aus Verfahrensschritt a) mit einem Phthalimidderivat und einem kondensierten Formaldehyd, wie z.B. und bevorzugt Paraformaldehyd umgesetzt wird.

Bevorzugt wird Verfahrensschritt b) so durchgeführt, dass zunächst das Amidomethylierungsreagens hergestellt wird und dieses dann zu dem Produkt aus Verfahrensschritt a) hinzugegeben wird. Dies ist ein Phthalimidderivat, dass in einem Lösungsmittel gelöst und mit Formalin versetzt wird. Anschließend wird dann unter Wasserabspaltung hieraus ein Bis-(Phthalimido)ether gebildet. Der Bis-(Phthalimido)ether kann gegebenenfalls zum Phthalimidoester umgesetzt werden. Bevorzugt wird der Bis-(Phthalimido)ether eingesetzt. Bevorzugte Phthalimidderivate im Sinne der vorliegenden Erfindung sind Phthalimid oder substituierte Phthalimide, wie z.B. und bevorzugt Methylphthalimid. Besonders bevorzugt wird als Pthalimidderivat Phthalimid eingesetzt.

Das molare Verhältnis der Phthalimiderivate zu den Perlpolymerisaten liegt im Verfahrensschritt b) bei 0,7:1 bis 1,7:1. Bevorzugt wird das Phthalimidderivat in einem Stoffmengenverhältnis von 0,7:1 bis 1,35:1 in Verfahrensschritt b) eingesetzt. Ganz besonders bevorzugt werden 0,8 mol bis 1,0 mol Phthalimidderivat pro mol Perlpolymerisat in Verfahrensschritt b) eingesetzt.

Formalin wird üblicherweise bezogen auf Phthalimidderivat im Überschuß eingesetzt, es können aber auch andere Mengen eingesetzt werden. Bevorzugt wird pro mol Phthalimidderivat 1,01 bis 1,2 mol Formalin eingesetzt. Ganz bevorzugt werden 1,03 bis 1,07 mol Formalin pro mol Phthalimidderivat eingesetzt.

Als Lösungsmittel kommen im Verfahrensschritt b) inerte Lösungsmittel zum Einsatz, die geeignet sind, das Polymer zu quellen, bevorzugt chlorierte Kohlenwasserstoffe, besonders bevorzugt Dichlorethan oder Methylenchlorid.

Im Verfahrensschritt b) wird das Perlpolymerisat mit Phthalimidderivaten kondensiert. Als Katalysator wird hierbei Oleum, Schwefelsäure oder Schwefeltrioxid eingesetzt, um daraus ein $SO_3$-Addukt des Phthalimidderivats im inerten Lösungsmittel herzustellen. Im Verfahrensschritt b) wird üblicherweise der Katalysator im Unterschuss zum Phthalimidderivat zugesetzt, wenn gleich auch größere Mengen verwendet werden können. Bevorzugt liegt das molare Verhältnis des Katalysators zu den Phthalimidderivaten zwischen 0,1 : 1 und 0,45 :1. Besonders bevorzugt liegt das molare Verhältnis des Katalysators zu den Phthalimidderivaten zwischen 0,2 : 1 und 0,4 : 1.

Die Temperatur bei der Zugabe des Katalysators zum Perlpolymerisat und dem $SO_3$-Addukt des Phthalimidderivates sollte bevorzugt unter < 45°C, besonders bevorzugt zwischen 5 bis 30°C liegen.

Verfahrensschritt b) kann in Abhängigkeit vom Lösungsmittel bei unterschiedlichsten Temperaturen durchgeführt werden. Im Allgemeinen wird die Reaktion bei 40°C bis 80°C durchgeführt, es können aber ebenfalls andere Temperaturen gewählt werden. Bevorzugt wird Verfahrensschritt b) bei 60°C bis 80 °C durchgeführt. Üblicherweise wird der Ansatz 1 bis 15 Stunden gerührt. Der Ansatz kann aber auch länger oder kürzer gerührt werden. Bevorzugt wird die Reaktion im Verfahrensschritt b) 6 bis 10 Stunden gerührt.

Durch das erfindungsgemäße Verfahren kann ein beliebiger Erstsubstitutionsgrad zwischen 0,6 und 1,5 Phthalimidomethyl-Gruppen bezogen auf die nicht substituierten aromatischen Reste erzielt werden. Mit Erstsubstitutionsgrad wird in der vorliegenden Anmeldung die mittlere Anzahl an Phthalimidomethylgruppen pro aromatischem Rest verstanden, bezogen auf die Summe der substituierten und nicht substituierten aromatischen Reste. Ein Erstsubstitutionsgrad von 1,1 bedeutet beispielsweise, dass 1 H Atom am aromatischen Rest durch eine Phthalimido-methylgruppe substituiert wurde und das zusätzlich noch jeder zehnte aromatische Rest zweifach substituiert wurde. Bevorzugt liegt der Erstsubstitutionsgrad durch Phthalimidomethylgruppen zwischen 0,6 bis 1,2 und besonders bevorzugt zwischen 0,7 und 0,9.

Die Abspaltung des Phthalsäurerestes und damit die Freilegung der Aminomethylgruppe erfolgt im Verfahrensschritt c) durch Behandeln des phthalimidomethylierten vernetzten Perlpolymerisates mit wässrigen oder alkoholischen Lösungen eines Alkalihydroxids, wie Natriumhydroxid oder Kaliumhydroxid bei Temperaturen von 100 bis 250°C, vorzugsweise von 120 bis 190°C. Die Konzentration der Natronlauge liegt im Bereich von 10 bis 50 Gew.-%, vorzugsweise von 20 bis 40 Gew.-%.

Das dabei entstehende aminomethylierte Perlpolymerisat wird schließlich mit vollentsalztem Wasser alkalifrei gewaschen.

Im Verfahrensschritt d) erfolgt die Herstellung der erfindungsgemäßen Chelatharze durch Umsetzung des aminomethylgruppenhaltigen vernetzten, vinylaromatischen Perlpolymerisates in wässriger Suspension mit Chloressigsäure oder ihren Salzen, wie beispielsweise und bevorzugt die Lithium-, Natrium-, Kalium-, Calcium und Magnesiumsalze. Ein insbesondere bevorzugtes Chloressigsäuresalz ist das Natriumsalz der Chloressigsäure.

Das Natriumsalz der Chloressigsäure wird bevorzugt als wässrige Lösung eingesetzt. Besonders bevorzugt wird eine wässrige Chloressigsäure mit 60 Gew.-% bis 85 Gew.-% eingesetzt.

Die wässrige Lösung des Natriumsalzes der Chloressigsäure oder die wässrige Chloressigsäure wird im Allgemeinen bei der Reaktionstemperatur innerhalb von 0,5 bis 15 Stunden in die vorgelegte wässrige Suspension des aminomethylgruppenhaltigen Perlpolymerisates dosiert. Bevorzugt erfolgt die Dosierung innerhalb von 5 bis 11 Stunden.

Die bei der Umsetzung der aminomethylgruppen haltigen Perlpolymerisate mit Chloressigsäure freiwerdende Salzsäure wird durch Zugabe von Natronlauge teilweise oder ganz neutralisiert, sodass der pH Wert der wässrigen Suspension bei dieser Reaktion im Bereich zwischen pH 7 bis 11,5 eingestellt wird. Bevorzugt wird die Reaktion bei pH 8 bis 10 durchgeführt.

Verfahrensschritt d) wird üblicherweise bei Temperaturen im Bereich zwischen 50°C und 100°C durchgeführt. Es können aber auch Temperaturen außerhalb dieses Bereiches gewählt werden. Bevorzugt erfolgt die Reaktion bei Temperaturen im Bereich zwischen 80°C und 95°C.

Das Molverhältnis des Chloressigsäurederivates zu dem aminomethylgruppenhaltigem Perpolymerisat beträgt zwischen 1,8 :1 und 2,5:1.

Als Suspensionsmedium wird Wasser oder wässrige Salzlösung eingesetzt. Als Salze kommen Alkalimetallsalze insbesondere NaCl und Natriumsulfat in Frage.

Durch die erfindungsgemäße Reaktion kann ein Funktionalisierungsgrad zwischen 1,4 und 1,65 bezogen auf die durch Essigsäuregruppen substituierten Wasserstoffatome der Aminogruppen erzielt werden. Ein Funktionalisierungsgrad von 1,5 bedeutet z.B., dass statistisch in jeder zweiten Aminogruppe beide Wasserstoffatome durch Essigsäuregruppen substituiert wurden.

Im Verfahrensschritt e) erfolgt die Dotierung der erfindungsgemäßen Chelatharze durch Umsetzung mit Aluminiumsalzlösungen zur Herstellung des aluminiumdotierten, Iminodiessigsäuregruppen enthaltenden Chelatharzes. Als geeignete Aluminiumsalzlösungen können alle Lösungen dreiwertiger Aluminiumsalze eingesetzt werden. Im Allgemeinen werden Salze des dreiwertigen Aluminiums mit starken Säuren wie z.B. Aluminiumchlorid, Aluminiumnitrat, Aluminiumsulfat, Aluminiumbromid oder Aluminiumiodid oder deren Hydrate und Solvate verwendet. Bevorzugt wird Aluminiumchlorid zur Dotierung der Iminodiessigsäuregruppen enthaltenden Chelatharzes verwendet. Bevorzugt wird als Lösungsmittel der Aluminiumsalze Wasser verwendet. Bevorzugt werden wässrige Lösungen eingesetzt.

Die zur Dotierung eingesetzte Menge an Aluminium liegt im Allgemeinen zwischen 2 bis 6 mol Aluminium bezogen auf ein Liter eingesetztes Iminodiessigsäuregruppen enthaltendes Chelatharz.

Bevorzugt werden monodisperse, aluminiumdotierte, Iminodiessigsäuregruppen enthaltende Chelatharze eingesetzt.

Das erfindungsgemäße aluminiumdotierte, Iminodiessigsäuregruppen enthaltende Chelatharz ist besonders geeignet zur Entfernung von Fluorid aus Wasser.

Die aluminiumdotierten, Iminodiessigsäuregruppen enthaltenden Chelatharze können unterschiedliche Mengen an Aluminium enthalten. Im Allgemeinen enthalten die aluminiumdotierten, Iminodiessigsäuregruppen enthaltenden

Chelatharze 10 bis 50 Gramm Aluminium pro Liter Harz. Bevorzugt enthalten die aluminiumdotierten, Iminodiessigsäuregruppen enthaltenden Chelatharze 25 bis 35 Gramm Aluminium pro Liter Harz.

Die Fluoridkapazität des aluminiumdotierten, Iminodiessigsäuregruppen enthaltenden Chelatharzes an Fluorid beträgt im Allgemeinen und bevorzugt zwischen 1 bis 30 g pro Liter an eingesetztem Chelatharz.

Insbesondere bei hohem Gesamtsalzgehalt des Wassers (> 10 meq/L), hat sich gezeigt, dass ganz besonders aluminiumdotierten, Iminodiessigsäuregruppen enthaltenden Chelatharze mit einem Erstsubstitutionsgrad durch Phthalimidomethylgruppen zwischen 0,7 bis 0,9 und einem Funktionalisierungsgrad der Aminogruppen durch Essigsäuregruppen von 1,4 bis 1,65 eine besonders hohe Affinität zu Fluoridionen besitzen.

Bevorzugt sind aluminiumdotierte Iminodiessigsäuregruppen enthaltende Chelatharze mit einem Erstsubstitutionsgrad durch Phthalimidomethylgruppen von 0,6 bis 1,2 und einem Funktionalisierungsgrad der Aminogruppen durch Essigsäuregruppen von 1,4 bis 1,65, die dadurch hergestellt werden, dass man

a) Monomertröpfchen aus wenigstens einer monovinylaromatischen Verbindung und wenigstens einer polyvinylaromatischen Verbindung sowie wenigstens einem Porogen und wenigstens einem Initiator zu einem vernetzten Perlpolymerisat umsetzt,

b) das vernetzte Perlpolymerisat aus Schritt a) mit Phthalimidderivaten phthalimidomethyliert und bei dieser Umsetzung das Phthalimidderivat in einem Verhältnis von 0,7 mol bis 1,35 mol pro Mol Perlpolymerisat eingesetzt wird,

c) das phthalimidomethylierte Perlpolymerisat mit einem Erstsubstitutionsgrad durch Phtalimidomethylgruppen von 0,6 bis 1,5 aus Schritt b) zu aminomethyliertem Perlpolymerisat umsetzt und

d) das aminomethylierte Perlpolymerisat aus Schritt c) mit Chloressigsäure oder deren Salze zu Chelatharzen mit Iminodiessigsäuregruppen mit einem Funktionalisierungsgrad der Aminogruppen durch Essigsäuregruppen von 1,4 bis 1,65 umsetzt und das molare Verhältnis von Chloressigsäure oder deren Salze 1,8:1 bis 2,5:1 bezogen auf die Menge des eingesetzten aminomethylierten Perlpolymerisats beträgt.

Besonders bevorzugt sind aluminiumdotierte Iminodiessigsäuregruppen enthaltende Chelatharze mit einem Erstsubstitutionsgrad durch Phthalimidomethylgruppen von 0,7 bis 0,9 und einem Funktionalisierungsgrad der Aminogruppen durch Essigsäuregruppen von 1,4 bis 1,65, die dadurch hergestellt werden, dass man

a) Monomertröpfchen aus wenigstens einer monovinylaromatischen Verbindung und wenigstens einer polyvinylaromatischen Verbindung sowie wenigstens einem Porogen und wenigstens einem Initiator zu einem vernetzten Perlpolymerisat umsetzt,

b) das vernetzte Perlpolymerisat aus Schritt a) mit Phthalimidderivaten phthalimidomethyliert und bei dieser Umsetzung das Phthalimidderivat in einem Verhältnis von 0,8 mol bis 1,0 mol pro Mol Perlpolymerisat eingesetzt wird,

c) das phthalimidomethylierte Perlpolymerisat aus Schritt b) zu aminomethyliertem Perlpolymerisat umsetzt und

d) das aminomethylierte Perlpolymerisat aus Schritt c) mit Chloressigsäure oder deren Salze zu Chelatharzen mit Iminodiessigsäuregruppen mit einem Funktionalisierungsgrad der Aminogruppen durch Essigsäuregruppen von 1,4 bis 1,65 umsetzt und das molare Verhältnis von Chloressigsäure oder deren Salze 1,8:1 bis 2,5:1 bezogen auf die Menge des eingesetzten aminomethylierten Perlpolymerisats beträgt.

Die Erfindung ist zur Entfernung von Fluorid aus Wasser geeignet. Daher ist von der Erfindung zudem eine Vorrichtung zur Entfernung von Fluorid aus Wasser umfasst, die mindestens ein aluminiumdotiertes, Iminodiessigsäuregruppen enthaltendes Chelatharz enthält.

Die Vorrichtung könnte zudem ein weiteres Iminodiessigsäuregruppen enthaltendes Chelatharz beinhalten, welches mit Kalziumionen dotiert wurde. Solche Harze und deren Herstellung sind aus dem Stand der Technik bekannt. Bei der Kombination zweier, mit Aluminium oder mit Kalzium dotierte Iminodiessigsäuregruppen enthaltende Chelatharze, kann einerseits Fluorid aus dem Wasser entfernt werden und andererseits die Menge an toxischen Aluminiumionen, die an das Wasser aus dem aluminiumdotierten, Iminodiessigsäuregruppen enthaltenden Chelatharz abgegeben wird, reduziert werden kann.

Wasser im Sinne der Erfindung sind vorzugsweise wässrige Lösungen, Emulsionen oder Mischungen aus Wasser und organischen Lösungsmitteln. Im wässrigen Anteil dieses Wassers liegen die Fluoride in gelöster Form vor. Im Allgemeinen enthält das Wasser einen wässrigen Anteil von mindestens 10 Gew.-% Wasser bezogen auf die Gesamtmenge an Wasser. Besonders bevorzugt enthält das Wasser gemäß der vorliegenden Erfindung mindestens 90

Gew.-% Wasser, ganz besonders bevorzugt mindestens 99 Gew.-% Wasser, bezogen auf die Gesamtmenge an Wasser.

Wasser, welches im Rahmen der Erfindung aufgereinigt werden soll, kann z.B. auch bei der Extraktion von Böden entstehen oder Abwasser darstellen. Um dieses Wasser zur weiteren Reinigung im erfindungsgemäßen Verfahren einzusetzen, wird vorzugsweise eine Filtration durchgeführt, bevor dieses Wasser mit dem erfindungsgemäßen aluminiumdotierten, Iminodiessigsäuregruppen enthaltenden Chelatharz gereinigt wird.

In der Regel sind die erfindungsgemäßen Chelatharze Bestandteil einer Ionenaustauschersäule. Die Beladung dieser Säulen mit wässrigen Lösungen, welche Fluorid enthalten, erfolgt nach dem Fachmann bekannten Verfahren.

Die erfindungsgemäßen aluminiumdotierten, Iminodiessigsäuregruppen enthaltenden Chelatharze eignen sich zur Adsorption von Fluoridionen aus Wasser. Insbesondere eignen sich die erfindungsgemäßen aluminiumdotierten, Iminodiessigsäuregruppen enthaltenden Chelatharze zur Entfernung von Fluorid aus Wasser zur Herstellung von Trinkwasser.

Durch die Entfernung von Fluorid aus Wasser mit Hilfe des erfindungsgemäßen aluminiumdotierten, Iminodiessigsäuregruppen enthaltenden Chelatharzes kann der Gehalt von Fluorid auf unter 1,5 ppm reduziert werden. Im Sinne der Erfindung bedeutet daher die Aufreinigung von Wasser zur Herstellung von Trinkwasser, dass der Gehalt an Fluorid im Eluat des aluminiumdotierten, Iminodiessigsäuregruppen enthaltenden Chelatharzes auf Werte kleiner 1,5 ppm reduziert wird.

Daher ist von der Erfindung ebenfalls die Verwendung von aluminiumdotierten, Iminodiessigsäuregruppen, enthaltenden Chelatharze zur Entfernung von Fluorid aus Wasser, insbesondere zur Herstellung von Trinkwasser umfasst.

Die erfindungsgemäßen aluminiumdotierten, Iminodiessigsäuregruppen enthaltenden Chelatharze weisen eine besonders hohe Affinität zu Fluoridionen auf und sind daher besonders zur Entfernung von Fluorid, insbesondere unter hohen Salzgehalten (>10 meq/L), aus Wasser geeignet.

## Beispiele

### Beispiel 1

a) Herstellung des monodispersen, makroporösen Perlpolymerisates auf der Basis von Styrol, Divinylbenzol und Ethylstyrol

In einem 10 l Glasreaktor werden 3000 g entionisiertes Wasser vorgelegt und eine Lösung aus 10 g Gelatine, 16 g di-Natriumhydrogenphosphatdodekahydrat und 0,73 g Resorcin in 320 g entionisiertem Wasser hinzugefüllt und durchmischt. Die Mischung wird auf 25°C temperiert. Unter Rühren wird anschließend eine Mischung aus 3200 g von mikroverkapselten Monomertröpfchen mit enger Teilchengrössenverteilung aus 3,6 Gew.-% Divinylbenzol und 0,9 Gew.-% Ethylstyrol (eingesetzt als handelsübliches Isomerengemisch aus Divinylbenzol und Ethylstyrol mit 80 % Divinylbenzol), 0,5 Gew.-% Dibenzoylperoxid, 56,2 Gew.-% Styrol und 38,8 Gew. % Isododekan (techn. Isomerengemisch mit hohem Anteil an Pentamethylheptan) gegeben, wobei die Mikrokapsel aus einem mit Formaldehyd gehärteten Komplexkoazervat aus Gelatine und einem Copolymer aus Acrylamid und Acrylsäure besteht, und 3200 g wässriger Phase mit einem pH-Wert von 12 zugesetzt. Die mittlere Teilchengröße der Monomertöpfchen beträgt 460 μm.

Der Ansatz wird unter Rühren durch Temperaturerhöhung nach einem Temperaturprogramm bei 25°C beginnend und bei 95°C endend auspolymerisiert. Der Ansatz wird abgekühlt, über ein 32 μm-Sieb gewaschen und anschließend im Vakuum bei 80°C getrocknet. Man erhält 1893 g eines kugelförmigen Polymerisates mit einer mittleren Teilchengröße von 440 μm, enger Teilchengrößenverteilung und glatter Oberfläche.

Das Polymerisat ist in der Aufsicht kreidig weiß und weist eine Schüttdichte von ca. 370 g/l auf.

b) Herstellung des monodispersen amidomethylierten Perlpolymerisates

Bei Raumtemperatur werden 2122 ml Dichlorethan, 417,1 g Phthalimid und 245, 7g 36 gew.-%iges Formalin vorgelegt. Der pH Wert der Suspension wird mit Natronlauge auf 5,5 bis 6 eingestellt. Anschließend wird das Wasser destillativ entfernt. Dann werden 30,6 g Schwefelsäure zudosiert. Das entstehende Wasser wird destillativ entfernt. Der Ansatz wird abgekühlt. Bei 30°C werden 111,7 g 65 %iges Oleum und anschließend 371,4 g monodisperses Perlpolymerisat, hergestellt nach Verfahrensschritt a) aus Beispiel 1 eindosiert. Die Suspension wird auf 70°C erhitzt und weitere 6,5 Stunden bei dieser Temperatur gerührt. Die Reaktionsbrühe wird abgezogen, voll entsalztes Wasser wird hinzudosiert und Restmengen an Dichlorethan werden destillativ entfernt.

Ausbeute an amidomethyliertem Perlpolymerisat : 1600 ml
Stickstoffgehalt : 4,5 Gew.-%
Trockengewicht : 0,473 Gramm pro ml

c) Herstellung des monodispersen aminomethylierten Perlpolymerisates

Zu 1580 ml amidomethyliertem Perlpolymerisat werden 866 ml voll entsalztes Wasser und 608,4 g 50 gew.-%ige Natronlauge bei Raumtemperatur zudosiert. Die Suspension wird auf 180°C erhitzt und 8 Stunden bei dieser Temperatur gerührt.
Das erhaltene aminomethylierte Perlpolymerisat wird mit vollentsalztem Wasser gewaschen.
Ausbeute an monodispersem aminomethyliertem Perlpolymerisat : 1367 ml
Als Gesamtausbeute - hochgerechnet - ergeben sich 1384 ml
Elementaranalytische Zusammensetzung :

Kohlenstoff : 82,7 Gew. %

Wasserstoff: 8,4 Gew. %

Stickstoff : 8,0 Gew. %

Sauerstoff : 2,0 Gew. %

Menge an Aminomethylgruppen in mol pro Liter aminomethyliertem Perlpolymerisat: 1,76 mol/l.

Hieraus lässt sich errechnen, dass im statistischen Mittel pro aromatischem Kern

- herrührend aus den Styrol und Divinylbenzoleinheiten - 0,78 Wasserstoffatome durch Aminomethylgruppen substituiert wurden.

d) Herstellung des monodispersen Chelatharzes mit chelatisierenden Gruppen vom Iminoessigsäuretyp

Zu 769 ml vollentsalztem Wasser werden bei Raumtemperatur 730 ml aminomethyliertes Perlpolymerisat aus Beispiel 1c) dosiert. Die Suspension wird auf 90°C erhitzt. Zu dieser Suspension werden innerhalb von 6 Stunden 345 g einer wässrigen Lösung, die 80 gew.-%ig an Monochloressigsäure ist, dosiert. Gleichzeitig wird der pH Wert der Suspension durch Dosierung von 50 gew.-%iger Natronlauge bei pH 9,2 gehalten. Anschließend wird der Ansatz auf 95 °C erhitzt und der pH-Wert der Suspension mit 50 gew.-%iger Natronlauge auf pH 10,5 eingestellt. Es wird weitere 6 Stunden bei pH 10,5 und 95°C gerührt.
Danach wird die Suspension abgekühlt. Das Harz wird mit vollentsalztem Wasser chloridfrei gewaschen.
Ausbeute: 1400 ml monodisperses Chelatharz
Original: 96 % perfekte Perlen von 100 untersuchten Perlen
Nach Walztest: 90 % perfekte Perlen von 100 untersuchten Perlen
Nach Quellungsstabilität: 96 % perfekte Perlen von 100 untersuchten Perlen
Totalkapazität des Harzes: 2,1 mol/l Harz - Menge an schwach sauren Iminodiessigsäuregruppen im Chelatharz
TK/N Verhältnis : 1,60
Hiernach sind im statistischen Mittel 1,60 der beiden Wasserstoffatome der primären Aminogruppen durch Essigsäuregruppen substituiert.
Trockengewicht: 343 Gramm pro Liter Harz
Mittlerer Perldurchmesser: 610 $\mu$
Gleichheitskoeffizient: 1,07

e) Dotierung der Harze mit Aluminium

110 ml Chelatharz aus Beispiel d) werden in eine Chromatographiesäule mit Frittenboden eingebaut. In einem 1 Liter Becherglas werden 550 ml einer 1 normalen Lösung von $AlCl_3$ in demineralisiertem Wasser vorgelegt. Mittels Schlauchpumpe wird die Aluminiumchloridlösung nun eine Stunde lang im Abstrom über das Harzbett und wieder zurück in das Becherglas gepumpt. Die Umpumprate liegt dabei bei 10 BV/h, also 1,1 Liter/h. Das Harz belädt sich dabei mit Aluminium und schrumpft um 10 % im Volumen auf 100 ml.
Danach wird die Aluminiumchloridlösung verworfen und 1 Liter deionisiertes Wasser in das Becherglas gefüllt. Das deionisierte Wasser wird mit einer Pumprate von 1 Liter pro Stunde (10 BV/h) über das Harz in den Ausguss gefördert. Das deionisierte Wasser spült überschüssiges Aluminium vom Chelatharzharz. Das Material ist danach betriebsbereit.
Harzvolumen: 100 ml

100 ml Harz enthalten 3,2 Gramm Aluminium.
Mittlerer Perldurchmesser: 590 $\mu$
Gleichheitskoeffizient: 1,07

## Beispiel 2

Versuch zur Adsorption von Fluorid an einem mit Aluminium dotierten Harz mit einem Funktionalisierungsgrad = 1,5

Harzmuster A (aluminiumdotiertes, Iminodiessigsäuregruppen enthaltendes Chelatharz hergestellt analog zu Beispiel 1):

Erstsubstitutionsgrad: 0,78, Funktionalisierungsgrad = 1,5,

Mittlerer Korndurchmesser= 0,65

100 ml des mit Aluminium dotierten Harzes werden in der o.g. Chromatographiesäule für den Abstrombetrieb im Zulauf über eine Pumpe an einen 200 Liter Vorlagebehälter und im Ablauf an einen 200 Liter Auffangbehälter angeschlossen.
Im 200 Liter Zulaufbehälter werden 200 Liter demineralisiertes Wasser vorgelegt und darin 28 g $CaCl_2$, 53 g $Na_2SO_4$*$6H_20$, 100 g NaCl und 4,4 g NaF gelöst. Die resultierende ionische Zusammensetzung der Lösung ist in Tabelle 1 angegeben.

**Tabelle 1:** Zusammensetzung der Zulauflösung

| Ion | Konzentration [ppm] | Konzentration [meq/l] |
|---|---|---|
| Calcium | 51 | 2,54 |
| Natrium | 257 | 11,17 |
| Chlorid | 393 | 11,09 |
| Sulfat | 102 | 2,13 |
| Fluorid | 10 | 0,53 |
| Gesamt | 813 | 27,46 |

In regelmäßigen Zeitabständen werden im Ablauf die Fluoridkonzentrationen gemessen. Aus dem Volumen an Filtrat, in welchem eine Ablaufkonzentration von < 1,5 mg/L gemessen wird, ergibt sich über Massenbilanzierung die Nutzbare Kapazität (NK) angegeben als die Masse abgeschiedenen Fluorids (in g) pro Liter Chelataustauscher (in der vorgelegten Aluminiumform).
Die Ergebnisse sind in Tabelle 2 dargestellt:

**Tabelle 2:** Nutzbare Kapazitäten (NK) von Harz A:

| **Harzmuster** | **NK (g F-pro L Harz)** |
|---|---|
| Harzmuster A (aluminiumdotiertes, Iminodiessigsäuregruppen enthaltendes Chelatharz hergestellt analog zu Beispiel 1): | 2,8 |
| Erstsubstitutionsgrad: 0,78 | |
| Funktionalisierungsgrad: 1,5 | |
| mittlerer Korndurchmesser: 0,65 | |

## Vergleichsbeispiel

Versuch zur Adsorption von Fluorid an einem mit Aluminium dotierten Harz mit einem Funktionalisierungsgrad = 2,0

Harzmuster B (aluminiumdotiertes, Iminodiessigsäuregruppen enthaltendes Chelatharz):

Erstsubstitutionsgrad: 0,78, Funktionalisierungsgrad = 2,0,

Mittlerer Korndurchmesser= 0,65

100 ml des mit Aluminium dotierten Harzes werden in der o.g. Chromatographiesäule für den Abstrombetrieb im Zulauf über eine Pumpe an einen 200 Liter Vorlagebehälter und im Ablauf an einen 200 Liter Auffangbehälter angeschlossen.

Im 200 Liter Zulaufbehälter werden 200 Liter demineralisiertes Wasser vorgelegt und darin 28 g $CaCl_2$, 53 g $Na_2SO_4*6H_2O$, 100 g NaCl und 4,4 g NaF gelöst. Die resultierende ionische Zusammensetzung der Lösung ist in Tabelle 2 angegeben.

**Tabelle 2:** Zusammensetzung der Zulauflösung

| Ion | Konzentration [ppm] | Konzentration [meq/l] |
|---|---|---|
| Calcium | 51 | 2,54 |
| Natrium | 257 | 11,17 |
| Chlorid | 393 | 11,09 |
| Sulfat | 102 | 2,13 |
| Fluorid | 10 | 0,53 |
| Gesamt | 813 | 27,46 |

In regelmäßigen Zeitabständen werden im Ablauf die Fluoridkonzentrationen gemessen. Aus dem Volumen an Filtrat, in welchem eine Ablaufkonzentration von < 1,5 mg/L gemessen wird, ergibt sich über Massenbilanzierung die Nutzbare Kapazität (NK) angegeben als die Masse abgeschiedenen Fluorids (in g) pro Liter Chelataustauscher (in der vorgelegten Aluminiumform).

Die Ergebnisse sind in Tabelle 3 dargestellt:

**Tabelle 3:** Nutzbare Kapazitäten (NK) des Harzes:

| **Harzmuster** | **NK (g F-pro L Harz)** |
|---|---|
| Harzmuster B: (aluminiumdotiertes, Iminodiessigsäuregruppen enthaltendes Chelatharz): | 0,7 |
| Erstsubstitutionsgrad: 0,78 | |
| Funktionalisierungsgrad: 2,0 | |
| mittlerer Korndurchmesse: 0,65 | |

Aus den Daten ist erkennbar, dass Harzmuster A mit einem Zweitsubstitutionsgrad von 1,5 eine 3 bis 4-fach höhere Fluoridaufnahme zeigt, als im Vergleich hierzu Harzmuster B mit einem Substitutionsgrad von 2.

**Analysenmethoden**

Bestimmung der Menge an basischen Aminomethylgruppen im aminomethylierten, vernetzten Polystyrolperlpolymerisat

100 ml des aminomethylierten Perlpolymerisates werden auf dem Stampfvolumeter eingerüttelt und anschließend mit vollentsalztem Wasser in eine Glassäule gespült. In 1 Stunde und 40 Minuten werden 1000 ml 2 gew.-%ige Natronlauge überfiltriert. Anschließend wird vollentsalztes Wasser überfiltriert bis 100 ml Eluat mit Phenolphthalein versetzt einen Verbrauch an 0,1 n (0,1 normaler) Salzsäure von höchstens 0,05 ml haben.

50 ml dieses Harzes werden in einem Becherglas mit 50 ml vollentsalztem Wasser und 100 ml 1n Salzsäure versetzt. Die Suspension wird 30 Minuten gerührt und anschließend in eine Glassäule gefüllt. Die Flüssigkeit wird abgelassen. Es werden weitere 100 ml 1n Salzsäure über das Harz in 20 Minuten filtriert. Anschließend werden 200 ml Methanol überfiltriert. Alle Eluate werden gesammelt und vereinigt und mit 1n Natronlauge gegen Methylorange titriert.

Die Menge an Aminomethylgruppen in 1 Liter aminomethyliertem Harz errechnet sich nach folgender Formel: $(200 - V) \cdot 20$ = mol Aminomethylgruppen pro Liter Harz.

Bestimmung der Menge schwach saurer Iminodiessigsäuregruppen im Chelatharz und Bestimmung des Substitutionsgrades der Wasserstoffatome der primären Aminogruppen durch Essigsäuregruppen - TK / N Verhältnis

100 ml Austauscher werden in eine Filtersäule gefüllt und in 1,5 Stunden mit 500 ml 3 gew.-%iger Salzsäure eluiert. Dann wird mit voll entsalztem Wasser gewaschen bis der Ablauf neutral ist.

Von der verbleibenden Harzmenge werden 50 ml Harz genommen und in eine Säule gefüllt. 0,1 n Natronlauge wird über die Harzmenge filtriert. Der Ablauf wird jeweils in einem 250 ml Messkolben aufgefangen. Diese Flüssigkeitsmenge wird mit 1 n Salzsäure gegen Methylorange titriert. Es wird solange 0,1 n Natronlauge über das Harz filtriert bis 250 ml Ablauf einen Verbrauch von 24,5 bis 25 ml an 1n Salzsäure haben. Nach beendeter Prüfung bestimmt man das Volumen des Austauschers in der Na - Form.

$$\text{Totalkapazität ( TK )} = (X*25-\text{Summe } V) -3 \text{ in mol/l Austauscher}$$

X = Zahl der Ablauffraktionen

Summe V = Gesamtverbrauch in ml an 1 n Salzsäure bei der Titration

## Patentansprüche

1. Verfahren zur Herstellung eines aluminiumdotierten, Iminodiessigsäuregruppen enthaltenden Chelatharzes enthaltend funktionelle Gruppen der Formel (I)

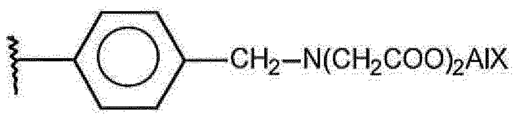

(I),

**dadurch gekennzeichnet, dass**

a.) Monomertröpfchen aus wenigstens einer monovinylaromatischen Verbindung und wenigstens einer polyvinylaromatischen Verbindung sowie wenigstens einem Porogen und wenigstens einem Initiator zu einem vernetzten Perlpolymerisat umsetzt werden,
b.) das vernetzte Perlpolymerisat aus Schritt a) mit Phthalimidderivaten phthalimidomethyliert wird und bei dieser Umsetzung das Phthalimidderivat in einem Verhältnis von 0,7 mol bis 1,7 mol pro Mol Perlpolymerisat eingesetzt wird,
c.) das phthalimidomethylierte Perlpolymerisat mit einem Erstsubstitutionsgrad durch Phthalimidomethylgruppen von 0,6 bis 1,5 aus Schritt b) zu aminomethyliertem Perlpolymerisat umgesetzt wird und
d.) das aminomethylierte Perlpolymerisat aus Schritt c) mit Chloressigsäure oder deren Salze zu Chelatharzen mit Iminodiessigsäuregruppen mit einem Funktionalisierungsgrad der Aminogruppen durch Essigsäuregruppen von 1,4 bis 1,65 umgesetzt wird und das molare Verhältnis von Chloressigsäure oder deren Salze 1,8:1 bis 2,5:1 bezogen auf die Menge des eingesetzten aminomethylierten Perlpolymerisats beträgt und
e.) das iminodiessigsäuregruppen enthaltende Chelatharz aus Schritt d) mit einer Aluminiumsalzlösung eines dreiwertigen Aluminiumions in Kontakt gebracht wird.

2. Verfahren gemäß Anspruch 1, **dadurch gekennzeichnet, dass** Schritt b) bei einer Temperatur von 60°C bis 80°C durchgeführt wird.

3. Verfahren gemäß Anspruch 1 oder 2 **dadurch gekennzeichnet, dass** in Schritt b) zur Kondensation des Phthalimidderivates mit dem Perlpolymerisat ein Katalysator in einem Stoffmengen Verhältnis von 0,1 : 1 bis 0,45 : 1 in Bezug auf die eingesetzten Menge an Perlpolymerisat eingesetzt wird.

4. Verfahren zur Herstellung des Chelatharzes gemäß Anspruch 1, **dadurch gekennzeichnet, dass**

a) Monomertröpfchen aus wenigstens einer monovinylaromatischen Ver-bindung und wenigstens einer polyvinylaromatischen Verbindung sowie wenigstens einem Porogen und wenigstens einem Initiator zu einem vernetzten Perlpolymerisat umgesetzt werden,

b) das vernetzte Perlpolymerisat aus Schritt a) mit Phthalimidderivaten phthalimidomethyliert wird und bei dieser Umsetzung das Phthalimidderivat in einem Verhältnis von 0,7 mol bis 1,35 mol pro Mol Perlpolymerisat eingesetzt wird,
c) das phthalimidomethylierte Perlpolymerisat mit einem Erstsubstitutionsgrad durch Phtalimidomethylgruppen von 0,6 bis 1,5 aus Schritt b) zu aminomethyliertem Perlpolymerisat umgesetzt wird und
d.) das aminomethylierte Perlpolymerisat aus Schritt c) mit Chloressigsäure oder deren Salze zu Chelatharzen mit Iminodiessigsäuregruppen mit einem Funktionalisierungsgrad der Aminogruppen durch Essigsäuregruppen von 1,4 bis 1,65 umgesetzt wird und das molare Verhältnis von Chloressigsäure oder deren Salze 1,8:1 bis 2,5:1 bezogen auf die Menge des eingesetzten aminomethylierten Perlpolymerisats beträgt und
e.) das iminodiessigsäuregruppen enthaltende Chelatharz aus Schritt d) mit einer Aluminiumsalzlösung eines dreiwertigen Aluminiumions in Kontakt gebracht wird.

5. Verfahren gemäß mindestens einem der Ansprüche 1 bis 3, **dadurch gekennzeichnet, dass** die in Verfahrensschritt e) eingesetzte Menge an Aluminium 2 bis 6 mol Aluminium bezogen auf ein Liter eingesetztes Iminodiessigsäuregruppen enthaltendes Chelatharz beträgt.

6. Aluminiumdotiertes, Iminodiessigsäuregruppen enthaltendes Chelatharz mit einem Erstsubstitutionsgrad durch Phthalimidomethylgruppen von 0,6 bis 1,5 und einem Funktionalisierungsgrad der Aminogruppen durch Essigsäuregruppen von 1,4 bis 1,65 hergestellt gemäß Anspruch 1.

7. Vorrichtung zur Entfernung von Fluorid aus Wasser, enthaltend mindestens eine Schicht a) mindestens eines aluminiumdotierten; Iminodiessigsäuregruppen enthaltenden Chelatharzes gemäß einem der Ansprüche 6.

8. Verwendung des Chelatharzes gemäß einem der Ansprüche 6 zur Entfernung von Fluorid aus Wasser, bevorzugt zur Herstellung von Trinkwasser.

## Claims

1. Process for producing an aluminium-doped chelate resin containing iminodiacetic acid groups and containing functional groups of the formula (I)

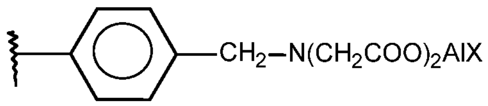

(I),

**characterized in that**

a.) monomer droplets composed of at least one monovinylaromatic compound and at least one polyvinylaromatic compound and at least one porogen and at least one initiator are converted to a crosslinked bead polymer,
b.) the crosslinked bead polymer from step a) is phthalimidomethylated with phthalimide derivatives and the phthalimide derivative is used in this reaction in a ratio of 0.7 mol to 1.7 mol per mole of bead polymer,
c.) the phthalimidomethylated bead polymer from step b) is converted to aminomethylated bead polymer with a first substitution level by phthalimidomethyl groups of 0.6 to 1.5 and
d.) the aminomethylated bead polymer from step c) is reacted with chloroacetic acid or salts thereof to give chelate resins having iminodiacetic acid groups having a functionalization level of the amino groups with acetic acid groups of 1.4 to 1.65 and the molar ratio of chloroacetic acid or salts thereof is 1.8:1 to 2.5:1 based on the amount of the aminomethylated bead polymer used and
e.) the chelate resin containing iminodiacetic acid groups from step d) is contacted with an aluminium salt solution of a trivalent aluminium ion.

2. Process according to Claim 1, **characterized in that** step b) is conducted at a temperature of 60°C to 80°C.

3. Process according to Claim 1 or 2, **characterized in that**, in step b), condensation of the phthalimide derivative with the bead polymer is accomplished using a catalyst in a molar ratio of 0.1:1 to 0.45:1 in relation to the amount of bead polymer used.

4. Process for producing the chelate resin according to Claim 1, **characterized in that**

a) monomer droplets composed of at least one monovinylaromatic compound and at least one polyvinylaromatic compound and at least one porogen and at least one initiator are converted to a crosslinked bead polymer,
b) the crosslinked bead polymer from step a) is phthalimidomethylated with phthalimide derivatives and the phthalimide derivative is used in this reaction in a ratio of 0.7 mol to 1.35 mol per mole of bead polymer,
c) the phthalimidomethylated bead polymer from step b) is converted to aminomethylated bead polymer with a first substitution level by phthalimidomethyl groups of 0.6 to 1.5 and
d) the aminomethylated bead polymer from step c) is reacted with chloroacetic acid or salts thereof to give chelate resins having iminodiacetic acid groups having a functionalization level of the amino groups with acetic acid groups of 1.4 to 1.65 and the molar ratio of chloroacetic acid or salts thereof is 1.8:1 to 2.5:1 based on the amount of the aminomethylated bead polymer used and
e) the chelate resin containing iminodiacetic acid groups from step d) is contacted with an aluminium salt solution of a trivalent aluminium ion.

5. Process according to at least one of Claims 1 to 3, **characterized in that** the amount of aluminium used in process step e) is 2 to 6 mol of aluminium based on one litre of chelate resin containing iminodiacetic acid groups used.

6. Aluminium-doped chelate resin containing iminodiacetic acid groups and having a first substitution level by phthalimidomethyl groups of 0.6 to 1.5 and a functionalization level of the amino groups with acetic acid groups of 1.4 to 1.65, prepared according to Claim 1.

7. Device for removing fluoride from water, comprising at least one layer a) of at least one aluminium-doped chelate resin containing iminodiacetic acid groups according to any of Claims 6.

8. Use of the device according to any of Claims 6 for removing fluoride from water, preferably for producing drinking water.

## Revendications

1. Procédé pour la préparation d'une résine chélatante dopée à l'aluminium, contenant des groupes acide iminodiacétique contenant des groupes fonctionnels de formule (I)

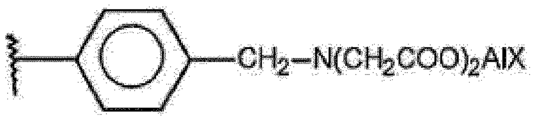

(I),

**caractérisé en ce que**,

a.) des gouttelettes de monomère composées d'au moins un composé monovinylaromatique et d'au moins un composé polyvinylaromatique ainsi que d'au moins un porogène et d'au moins un initiateur sont transformées en un polymérisat en perles réticulé,
b.) le polymérisat en perles réticulé de l'étape a) est phtalimidométhylé avec des dérivés de phtalimide et lors de cette transformation le dérivé de phtalimide est utilisé en un rapport de 0,7 mole à 1,7 mole, par mole de polymérisat en perles,
c.) le polymérisat en perles phtalimidométhylé doté d'un degré de première substitution par des groupes phtalimidométhyle de 0,6 à 1,5 de l'étape b) est transformé en polymérisat en perles aminométhylé et
d.) le polymérisat en perles aminométhylé de l'étape c) est transformé avec de l'acide chloroacétique ou ses sels en résines chélatantes comportant des groupes acide iminodiacétique dotées d'un degré de fonctionnalisation des groupes amino par des groupes acide acétique de 1,4 à 1,65 et le rapport molaire d'acide chloroacétique ou de ses sels est de 1,8:1 à 2,5:1 par rapport à la quantité du polymérisat en perles aminométhylé utilisé et
e.) la résine chélatante contenant des groupes acide iminodiacétique de l'étape d) est mise en contact avec une solution de sel d'aluminium d'un ion aluminium trivalent.

2. Procédé selon la revendication 1, **caractérisé en ce que** l'étape b) est réalisée à une température de 60 °C à 80 °C.

**3.** Procédé selon la revendication 1 ou 2, **caractérisé en ce que** dans l'étape b), pour la condensation du dérivé de phtalimide avec le polymérisat en perles, un catalyseur est utilisé en un rapport molaire de 0,1:1 à 0,45:1 par rapport à la quantité utilisée de polymérisat en perles.

**4.** Procédé pour la préparation de la résine chélatante selon la revendication 1, **caractérisé en ce que**

a) des gouttelettes de monomère composées d'au moins un composé monovinylaromatique et d'au moins un composé polyvinylaromatique ainsi que d'au moins un porogène et d'au moins un initiateur sont transformées en un polymérisat en perles réticulé,
b) le polymérisat en perles réticulé de l'étape a) est phtalimidométhylé avec des dérivés de phtalimide et lors de cette transformation le dérivé de phtalimide est utilisé en un rapport de 0,7 mole à 1,35 mole, par mole de polymérisat en perles,
c) le polymérisat en perles phtalimidométhylé doté d'un degré de première substitution par des groupes phtalimidométhyle de 0,6 à 1,5 de l'étape b) est transformé en polymérisat en perles aminométhylé et
d) le polymérisat en perles aminométhylé de l'étape c) est transformé avec de l'acide chloroacétique ou ses sels en résines chélatantes comportant des groupes acide iminodiacétique dotées d'un degré de fonctionnalisation des groupes amino par des groupes acide acétique de 1,4 à 1,65 et le rapport molaire d'acide chloroacétique ou de ses sels est de 1,8:1 à 2,5:1 par rapport à la quantité du polymérisat en perles aminométhylé utilisé et
e) la résine chélatante contenant des groupes acide iminodiacétique de l'étape d) est mise en contact avec une solution de sel d'aluminium d'un ion aluminium trivalent.

**5.** Procédé selon au moins l'une des revendications 1 à 3, **caractérisé en ce que** la quantité d'aluminium utilisée dans l'étape de procédé e) est de 2 à 6 moles d'aluminium par rapport à un litre de résine chélatante contenant des groupes acide iminodiacétique utilisée.

**6.** Résine chélatante dopée à l'aluminium, contenant des groupes acide iminodiacétique dotée d'un degré de première substitution par des groupes phtalimidométhyle de 0,6 à 1,5 et d'un degré de fonctionnalisation des groupes amino par des groupes acide acétique de 1,4 à 1,65 préparée selon la revendication 1.

**7.** Dispositif pour l'élimination de fluorure de l'eau, contenant au moins une couche a) d'au moins une résine chélatante dopée à l'aluminium, contenant des groupes acide iminodiacétique selon l'une quelconque des revendications 6.

**8.** Utilisation d'une résine chélatante selon l'une quelconque des revendications 6 pour l'élimination de fluorure de l'eau, préférablement pour la préparation d'eau potable.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2801724 A
- DE 3004058 A
- DE 3129473 A
- EP 0046535 A
- EP 2305382 A
- EP 2259874 A


### In der Beschreibung aufgeführte Nicht-Patentliteratur


- *Solvent Extraction and Ion Exchanger,* 2004, vol. 22 (2), 305-322
- Effect of metal ions loaded onto iminodiacetic acid functionalized cation exchange resin for selective fluoride removal. **S. M. PRABHUA ; S MEENAKSHIA.** DESALINATION AND WATER TREATMENT : SCIENCE AND ENGINEERING ; DWT. TAYLOR & FRANCIS, 20. Mai 2013, vol. 52, 2527-2536